(19) Europäisches Patentamt
European Patent Office
Office européen des brevets

(11) **EP 2 918 656 A1**

(12) **EUROPEAN PATENT APPLICATION**
published in accordance with Art. 153(4) EPC

(43) Date of publication:
**16.09.2015 Bulletin 2015/38**

(51) Int Cl.:
***C09K 17/02*** (2006.01)   ***A01G 1/00*** (2006.01)
***C09K 101/00*** (2006.01)

(21) Application number: **13853977.0**

(22) Date of filing: **06.11.2013**

(86) International application number:
**PCT/JP2013/080016**

(87) International publication number:
**WO 2014/073570 (15.05.2014 Gazette 2014/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **08.11.2012 JP 2012246064**

(71) Applicant: **Komatsu Seiren Co., Ltd.**
**Ishikawa 929-0124 (JP)**

(72) Inventors:
• **OKUYA, Teruhiro**
**Nomi-city**
**Ishikawa 929-0124 (JP)**

• **TOGASHI, Kohsuke**
**Nomi-city**
**Ishikawa 929-0124 (JP)**
• **KANEDA, Akihisa**
**Nomi-city**
**Ishikawa 929-0124 (JP)**
• **OHTA, Takeshi**
**Nomi-city**
**Ishikawa 929-0124 (JP)**

(74) Representative: **Kling, Simone**
**Lavoix Munich**
**Bayerstrasse 83**
**80335 München (DE)**

(54) **SOIL IMPROVING MATERIAL AND CULTURE SOIL CONTAINING SAME**

(57)   To solve problems of perlite, zeolite and vermiculite which have been conventionally used as soil improving materials, and to provide a soil improving material which has excellent water retaining properties and is well-drained to retain air in a soil to thus make a soil suitable for plant growth, and a culture soil containing the soil improving material. The soil improving material of the invention includes porous ceramic particles having a moisture content of 5 vol% or greater at a pF value of not more than 2.7. The particles preferably have a water retaining ratio of 15% or greater. The particles preferably have a saturated hydraulic conductivity of 0.1 cm/s or greater.

## Description

Technical Field

The present invention relates to a soil improving material which makes soil suitable for plant cultivation and a culture soil containing the soil improving material.

Priority is claimed on Japanese Patent Application No. 2012-246064, filed November 8, 2012, the content of which is incorporated herein by reference.

Background Art

Various types of soil are on the market as culture soils suitable for cultivation of plants such as vegetables, fruits or flowers. As characteristics of these culture soils, good drainage, good water retention, good air permeability, and a good fertilizer retaining properties are included. In addition, as characteristics of favorable culture soils, appropriately containing chemical substances necessary for plant growth and the existence of useful bacteria with respect to plants are included.

Therefore, the soil is mixed with Akadama soil, Kanuma soil, leaf mold, perlite, zeolite and/or vermiculite, etc. to improve the water draining property, water retention property, air permeability and/or fertilizer retaining properties.

In the plant cultivation performed indoors or on a veranda, since scattering a natural soil, soil runoff with water, insect emergence, and the like are disliked, particles of a high-molecular compound having a water absorbing property without containing natural soil, or porous ceramic particles are also used as a culture soil (PTL 1).

Citation List

Patent Literature

[PTL 1] Japanese Unexamined Patent Application, First Publication No. 2011-250762

Summary of Invention

Technical Problem

However, perlite, which has been used as a conventional soil improving material, is advantageous in that it is light, has good workability, improves a soil density, and supports growth of roots. However, it has low mass, and thus in a case of a culture soil obtained by mixing perlite as a soil improving material, the perlite floats on the surface of the ground and is washed away when irrigation is repeated.

Zeolite is advantageous in that it has excellent fertilizer retaining properties due to a large ion-exchange capacity, but has low water retaining properties. Frequent irrigation is required for the culture soil mixed with zeolite as a soil improving material.

Vermiculite is advantageous in that it has excellent water retaining properties and excellent fertilizer retaining properties, is light, and has good workability, but the producing areas of vermiculite are limited and there is a problem such as the mixing of foreign substances.

Particles of a high-molecular compound or porous ceramic particles are advantageous in that soil scattering or the like is suppressed and the particles are suitable for hydroponics. However, these are insufficient from the viewpoint of plant growth, except for when used in hydroponics.

The invention is contrived to solve the problems, and an object thereof is to provide a soil improving material which has excellent water retaining properties and is well-drained to supply air to soil to thus make the soil suitable for plant growth, and a culture soil containing the soil improving material.

Solution to Problem

In order to solve the problems, a soil improving material according to an embodiment of the invention has the following configuration.

(1) A soil improving material including: particles containing porous ceramics as a constituent material, in which the particles have a moisture content of 5 vol% or greater at a pF value falling within a range of not more than 2.7 with respect to the entire volume of the particles.

(2) The soil improving material according to (1), in which the particles have a water retaining ratio of 15% or greater.

(3) The soil improving material according to (1) or (2), in which the particles have a saturated hydraulic conductivity of 0.1 cm/s or greater.

In addition, a culture soil according to the invention has the following configuration.

(4) A culture soil including: the soil improving material according to any one of (1) to (3).

In addition, the following configuration is provided as another embodiment of the invention.

(5) A soil improving material including: porous ceramic particles having a moisture content of 5 % or greater at a pF value of not more than 2.7.

Advantageous Effects of Invention

The soil improving material of the invention can appropriately retain water and air which can be absorbed by plants. Accordingly, a culture soil which is excellent in terms of the growth of plants can be provided by using the soil improving material. In a preferred embodiment of the soil improving material of the invention, the water which can be absorbed by food can be retained in a large amount, and thus a culture soil in which the number of times of irrigation can be suppressed can be provided. In a preferred embodiment of the soil improving material of the invention, a culture soil which has good water permeability and is excellent in terms of the root growth environment including air can be provided.

In addition, the culture soil of the invention is excellent in terms of the growth of plants since it can retain water which can be absorbed by plants. In a preferred embodiment of the culture soil of the invention, the number of times of irrigation can be suppressed since the water which can be absorbed by food can be retained in a large amount. In a preferred embodiment of the culture soil of the invention, an excellent root growth environment is provided due to good water permeability and an appropriate amount of air included.

Description of Embodiments

Hereinafter, a soil improving material according to an embodiment of the invention will be described.

(Porous Ceramic Particles)

A soil improving material of this embodiment contains particles containing porous ceramics as a constituent material (hereinafter, also referred to as particles). The particles have a moisture content of 5 vol% or greater at a pF value falling within a range of not more than 2.7 with respect to the entire volume of the particles.

Here, the moisture content at a pF value falling within a range of not more than 2.7 will be described. Regarding a soil or a component such as a soil improving material of the soil (hereinafter, soil or the like), the pF value corresponding to the water absorbing ability of the soil or the like is defined by pressure. The pF value of the soil or the like fluctuates along with a physical state such as filling of the component or a water supply state, and the water which can be effectively used for plants (which can be absorbed by plants) is moisture which is absorbed by the soil or the like in a state in which the water is favorably absorbed by the soil or the like, that is, the pF value of the soil or the like is within a fixed range as will be described later. Here, when a load such as a fixed pressure is applied to the soil or the like and a change in the moisture content is directly or indirectly measured, the amount of the moisture absorbed by the soil or the like under a pressure equivalent to not more than the above pF value can be measured, and thus the moisture content (effective moisture ratio at a pF value within a fixed range) absorbed at a pF value within a fixed range by the soil or the like can be measured.

Specifically, the moisture content (%, volume moisture ratio, volume water content) within the range of each pF value of the particles can be measured using a centrifugation method, or combinations of various pF value measurement methods (tensiometer method and the like) and various moisture content measurement methods (TDR method and the like). In this embodiment, a centrifugal method is preferred in which a pressure corresponding to each pF is applied to the particles by centrifugal separation to obtain the mass of the particles before and after the application of the pressure, and thus the amount of the water discharged from the particles due to the pressure is obtained. More specifically, the amount of the water at each pF value can be measured and obtained according to a horizontal rotor for a 100 ml-circular cylinder in the water retaining property C centrifugal method described in "Soil Standard Analysis/Measurement Method" (Hakuyusha Co.,Ltd.). In this embodiment, the moisture content at a pF value falling within a range of not more than 2.7 (or, the moisture content at a pF value of not more than 2.7) can be obtained using the following expression.

Moisture Content (vol%) At pF Value Falling Within Range Of Not More Than 2.7 = (Mass (g) of Sample Before Centrifugal Process - Mass (g) of Sample After Centrifugal Process At pF Value Of 2.7)/100 (ml) x 100

Here, when the particles have a sufficient moisture content at a pF value falling within a range of not more than 2.7, that is, the moisture content is 5 vol% or greater with respect to the entire volume of the particles, the porous ceramic particles have moisture which can be absorbed by plants, and thus this is advantageous in plant growth. In addition, when the particles retain a large amount of moisture which can be absorbed by plants, the watering frequency can be reduced, and thus easy care is achieved. Here, the entire volume is, for example, a volume of the entire spaces occupied by the particles, that is, a total of a volume of spaces such as voids between solid components of the particles and between the particles and pores of the particles, and a volume of the liquid and the gas contained therein. The description that the particles "have a moisture content of 5 vol% or greater at a pF value falling within a range of not more than 2.7 with respect to the entire volume of the particles" is also simply expressed as follows: the particles "have a moisture content of 5 % or greater at a pF value of not more than 2.7".

When the moisture content of the particles at a pF value falling within a range of not more than 2.7 is less than 5 vol% with respect to the entire volume of the particles, the amount of water which can be absorbed by plants is small even when the particles has a high moisture content. Thus, the particles are not suitable for plant growth, or frequent watering is required.

The moisture content of the particles at a pF value of not more than 2.7 is preferably 8 vol% or greater, and more preferably 10 vol% or greater with respect to the entire volume of the particles. The upper limit is approximately 80 vol%.

More preferably, the moisture content of the particles at a pF value falling within a range of more than 1.5 to 2.7 is 1.0 vol% or greater. When the moisture content of the particles at a pF value of more than 1.5 to 2.7 is measured and is 1.0 vol% or greater with respect to the entire volume of the particles, moisture which can be absorbed by plants remains in the particles even when the culture soil is dehydrated to reduce the weight of the cultivated plants during transportation and to prevent water leakage from the cultivated plants. Thus, withering of plants can be suppressed. The moisture content at a pF value within this range is more preferably 2.0 vol% or greater, and even more preferably 3.0 vol% or greater. The upper limit of the moisture content is approximately 30 vol% although not particularly limited.

The moisture content of the particles at a pF value of more than 1.5 to 2.7 can be obtained using the following expression.

Moisture Content (vol%) At pF Value Of More Than 1.5 To 2.7 = (Mass (g) of Particle Sample After Centrifugal Process At pF value of 1.5 - Mass (g) of Sample After Centrifugal Process At pF value of 2.7)/100 (ml) x 100

The particles of the soil improving material of this embodiment contain porous ceramics as a constituent material. Preferably, the particles are substantially made of porous ceramics. Here, the porous ceramics is a sintered body of ceramics, that is, oxide of a metal or silicon and has porosity, that is, many pores (holes). Specifically, the ceramics is obtained by baking a mixture containing clay as a main component. The pores in the ceramics are generated naturally or due to the action of an additive such as a foaming agent during, for example, baking in a method of manufacturing porous ceramic particles to be described later.

As a result of manufacturing using the manufacturing method to be described later, the porous ceramics in a preferred form of this embodiment may have components obtained by sintering clay, organic sludge, and diatomaceous earth, and contain various arbitrary components, that is, various fibers and glass as will described in the manufacturing method to be described later.

A preferred embodiment of the pores will be described later. However, since the porous ceramic particles are porous, moisture can be absorbed by the pores, and the porosity contributes to the properties of the soil improving material of this embodiment in which when the moisture content at a pF value falling within a range of not more than 2.7 is measured, the moisture content is 5 vol% or greater with respect to the entire volume of the particles.

In this embodiment, the particles have a particle diameter of 5 cm or less. The particle diameter is preferably 3 cm or less, more preferably 2 cm or less, even more preferably 1 cm or less, and still more preferably 5 mm or less from the viewpoint of plant growth except for when used in hydroponics. Although not particularly limited, the lower limit is preferably 0.02 mm or greater from the viewpoint of the utilization of the pores formed in the porous ceramics, the gas-phase ratio, and the handleability of the particles such as dusting.

As the particles, particles having various sizes may be prepared and mixed in arbitrary proportions to use the mixture. For example, particles having a particle diameter of greater than 5 mm, particles having a particle diameter of greater than 1 mm to 5 mm, and particles having a particle diameter of 1 mm or less may be mixed and used in arbitrary proportions. The particle diameter is a value measured by sieving, and for example, the particles having a particle diameter of greater than 1 mm to 5 mm mean particles which pass through a sieve having 5 mm openings, but cannot pass through a sieve having 1 mm openings.

When the particle diameter is greater than 5 mm, water permeability can be remarkably improved.

When the particle diameter is greater than 1 mm to 5 mm, the water retaining properties can be improved and the gas phase can be increased.

When the particle diameter is greater than 0.02 mm to 1 mm, the particles are generally constricted and hardened due to the moisture and the like, and thus put into an undesirable state for growth of food. However, in the particles of this embodiment, such a constriction-hardening phenomenon is suppressed, and the particles are easily mixed with a soil to be improved. In addition, since the particles have micrometer-order pores, and preferably have nanometer-order pores, the particles have a gas phase and a preferred growth environment for plants can be provided.

For the soil improving material of this embodiment, particles having an arbitrary size may be used according to the characteristics of performance depending on the above-described difference in particle diameter, the use place such as an indoor place or an outdoor place, the size of farmland, a planter, or a container such as a pot, the kind of plant, the state of the soil requiring improvement, and the like.

The particles of this embodiment preferably have a water retaining ratio (volume moisture ratio) of 15% or greater. The water retaining ratio is more preferably 20% or greater, and even more preferably 30% or greater. Here, the water retaining ratio or water content indicates a volume moisture ratio with respect to the entire volume of the particles upon immersion in water. The water retaining ratio can be measured using a dry-heat method, a heating loss method, an electric resistance method or the like, which have been known. In this embodiment, for example, the particles can be put into a water-saturated state by immersion in water for 30 minutes or longer, preferably 1 hour or longer, and be used as a sample to perform the measurement using a dry-heat method. When the water retaining ratio is 15% or greater, the particles have a sufficient amount of water which can be absorbed by plants, and thus the watering may not be frequently performed and the plant growth is facilitated. The upper limit is approximately 95% although not particularly limited. The upper limit is preferably 85% or less from the viewpoint of strength of the particles.

The particles of this embodiment preferably have a saturated hydraulic conductivity of 0.1 cm/s or greater. The saturated hydraulic conductivity is more preferably 0.5 cm/s or greater, and even more preferably 1.0 cm/s. When the saturated hydraulic conductivity of the particles is 0.1 cm/s or greater, water can be rapidly discharged from the culture soil, air permeability can be maintained with pores in the porous ceramics constituting the particles in the culture soil, and oxygen can be maintained in the culture soil. Therefore, since root rot can be suppressed and water can be rapidly absorbed, floating from the improved soil as in a case of perlite can be suppressed even when the particles have a low apparent density and are light, or even when irrigation is performed or the heavy rain has ended.

The three-phase distribution of the particles preferably has a solid phase of 10% to 45%, a liquid phase of 10% to 50%, and a gas phase of 10% to 75% when a centrifugal process at a pF value of 1.5 is performed. Here, the three-phase distribution is, for example, a ratio in bulk density, and is a value obtained using an effective volumetric capacity method.

When the soil improving material in which the balance of the three-phase distribution is within such a range is mixed according to target performance of the soil to be improved, a sufficient amount of air and water suitable for plant growth can be included in the soil, and the soil improving material containing the particles of this embodiment can become a preferred soil improving material or culture soil.

In addition, when the culture soil has a large gas phase, heat insulation properties are exhibited and roots of plants are protected even in a region where the temperature difference is extreme. Thus, from the viewpoint of protecting the plants, the gas phase in the three-phase distribution of the particles is 10% or greater, preferably 20% or greater, and more preferably 30% or greater.

The particles of this embodiment preferably have a pH-buffering property. When the particles have a pH-buffering property and the pH of the soil improving material, the soil, or the water supplied to the soil is buffered to between 6 and 10 at nearly normal temperature (about 20°C to 30°C, or plant growth environment temperature), a soil having a growth environment suitable for the growth of a larger number of kinds of plants can be provided. In addition, when the particles have a pH-buffering property, damage to plants can be suppressed even when there is acid rain or the like having a pH of approximately 4. Even when the pH is out of the range specified in this specification, the pH is included in the scope of the invention if the pH is within the range specified in this specification when being corrected to a pH at normal temperature. The pH of the water, the soil improving material, or the soil described in this specification can be measured by appropriately using test paper, a test solution, an electric pH measuring device (pH meter or the like) or other measuring means.

The particles of this embodiment preferably contain phosphorus, nitrogen, or potassium. Phosphorus, nitrogen, and potassium are components referred to as the three major nutrients of plants, and are effective for plant growth. In this embodiment, to carry these nutrients on the particles, baked porous ceramics is impregnated with a component of a liquid fertilizer or the like during use as a soil improving material. Specifically, since the particles of this embodiment have an excellent fertilizer retaining property, nutrients such as phosphorus, nitrogen, and potassium are carried on the particles by applying (dropping or the like) an appropriate amount of a liquid fertilizer or the like to the particles together with the cultivation. As a result, these nutrients can be supplied to plants over a long period of time. It is also preferred that the solid components of the particles contain one or more of the three components and the particles have such a property as to be able to elute a minute amount of calcium and/or silicon from the viewpoint of plant growth.

Whether the particles have such a property as to be able to elute these components and elution amounts of the components can be adjusted according to the composition (mainly, the content of organic sludge and the like to be described later) of a mixture used in the manufacturing of porous ceramics to be described below, the state of the pores in the porous ceramics, or conditions of the above-described application or impregnation of a liquid fertilizer or the like.

The pores formed in the porous ceramics contained as a constituent material in the particles may be, for example, nanometer-order pores having a pore diameter of 10 nm to 1000 nm, micrometer-order pores having a pore diameter of greater than 1 $\mu$m to 1000 $\mu$m, or millimeter-order pores having a pore diameter of greater than 1 mm (the upper limit is a length of the long sides of the particles), or these pores may coexist. Particularly, pores having a large pore diameter and pores having a small pore diameter preferably coexist. For example, due to the coexistence of millimeter-order pores, micrometer-order pores, and nanometer-order pores, many voids are formed in the porous ceramics and the coexistence is preferred from the viewpoint of the retention of air including oxygen and the absorption and retention of minute amounts of nutrients contained in rain water or the like. In addition, due to the coexistence of these pores, preferred habitats of useful microorganisms living in a root region are provided, and thus various useful microorganisms can exist according to the degree of the aerobic properties.

The upper limit of the pore diameter of the pores is a length of the long side of the particles. When the particle diameter of the particles is less than 1 mm, the particles do not have millimeter-order pores, but have a small particle diameter and have micrometer-order pores and nanometer-order pores. Accordingly, the surface area is increased, many voids are formed, and as in a case in which millimeter-order pores exist, the retention of air, the absorption and retention of nutrients, and the provision of preferred habitats of useful microorganisms are possible.

The pore diameter of the pores can be adjusted by combining the kinds of raw materials and baking conditions. In the measurement of the pore diameter of the pores, the diameter of millimeter- or greater-order large pores may be roughly measured visually and using a scale. The diameters of large pores and micrometer- or less-order small pores can be measured by performing an image process or the like according to the scale from image data subjected to microscopic observation or the like. In this embodiment, the pore diameter of millimeter-order pores is a value obtained by cutting the porous ceramics and by measuring the length of the long side of the pores using a scale. The pore diameter of nanometer-order pores and micrometer-order pores is a value obtained by cutting the porous ceramics and by measuring the length of the long side of the pores using an electron microscope.

The pores formed in the porous ceramics may be pores which are independent from each other, or communicating holes communicating with each other. The pores preferably communicate with each other from the viewpoint of the moisture content, the water retaining ratio, the saturated hydraulic conductivity, and the supply of nutrients at each pF value of the particles to be obtained. The mutual communication between the pores improves the plant growth environment synergistically.

(Soil Improving Material)

The soil improving material of this embodiment may be formed only of the particles of this embodiment, or may be mixed with inorganic zeolite, perlite, bentonite or the like, organic compost, leaf mold, peat or the like, or other soil improving materials such as a high-molecular polyethyleneimine-based compound, and used as a soil improving material without departing from the object of this embodiment.

By mixing the soil improving material of this embodiment with a poorly drained clayey soil or a sand having poor water retaining properties, the properties of these soil and sand can be improved and a culture soil suitable for plant growth can be provided.

Accordingly, the soil improving material of this embodiment can be used as a soil improving material for various improvements from soil improvement for wide outdoor farmland to soil improvement for indoor ornamental purposes.

(Culture Soil)

The culture soil of this embodiment contains the soil improving material of this embodiment. In regard to the culture soil, Akadama soil or Kanuma soil is mixed with the soil improving material of this embodiment to compensate defects of the Akadama soil or Kanuma soil and to improve advantages, and thus a culture soil more suitable for plant growth can be provided. In addition, by mixing an arbitrary soil such as a poorly drained clayey soil which is not preferred as a culture soil for plants or a sand having poor water retaining properties with the soil improving material of this embodiment, a culture soil suitable for plant growth is provided.

When the soil improving material of this embodiment and other soils are mixed and used as a culture soil, in regard to the mixture and the mixing ratio, the mixing is preferably performed according to target properties of plants, a place to be used such as an indoor place or an outdoor place, and size and the like, and there is no particular limit thereon.

The culture soil of this embodiment may be formed only of the soil improving material of this embodiment. The particles contained in the soil improving material of this embodiment have a water retaining property, water permeability, and a gas phase suitable for plant growth, and thus even only the particles are favorable as a material constituting the culture soil. Accordingly, the culture soil of this embodiment may be formed only of the soil improving material formed only of the particles.

In the culture soil formed only of the soil improving material formed only of the particles of this embodiment, generation of dust or runoff with water is suppressed compared to a normal soil. Accordingly, when only the particles of this embodiment are used, the culture soil is also suitable for use as a soil for indoor and outdoor (particularly, indoor) horticultural purposes or a soil for hydroponics.

The culture soil of this embodiment can also be preferably used as a joint soil for grass and the like.

<Method of Manufacturing Porous Ceramics>

Examples of the method of manufacturing porous ceramics include a method including: mixing raw materials to be described later to obtain a mixture (hereinafter, may be simply referred to as mixture) (mixing process); molding the mixture to obtain a molded product (molding process); and baking the molded product to obtain porous ceramics (baking process).

The mixing process is a process of mixing various raw materials, preferably including clay, to obtain a mixture.

The mixture preferably contains, for example, at least one selected from the group consisting of a foaming agent, organic sludge, and diatomaceous earth and clay as raw materials, and more preferably contains a foaming agent, organic sludge, and clay. Using the foaming agent, millimeter-order large pores can be formed in the porous ceramic particles, and using diatomaceous earth, micrometer-order pores can be formed in the porous ceramic particles. In addition, using organic sludge, micrometer-order pores and nanometer-order smaller pores can be formed in the porous ceramic particles. Moreover, using organic sludge, the three major nutrients of plants such as nitrogen, phosphorus, and potassium can be eluted from the porous ceramic particles. The pores of the porous ceramic particles obtained using organic sludge are spaces particularly suitable for the growth of useful bacteria.

The mixture preferably contains one or more of a foaming agent, organic sludge, diatomaceous earth, and clay as raw materials from the viewpoint of an improvement in moisture content and in water retaining ratio at each pF value. Particularly, the mixture preferably contains one or more of a foaming agent, organic sludge, and clay as raw materials also from the viewpoint of the existence of nutrients for plants and useful bacteria serving for plant growth. The porous ceramics obtained by baking such a mixture has pores communicating with each other.

The foaming agent foams during baking, and a known foaming agent for ceramics such as calcium carbonate, silicon carbide, magnesium carbonate, or slag can be used. Slag is preferred among these foaming agents. The slag is not particularly limited, and examples thereof include blast furnace slag generated during metal refining, urban waste molten slag generated during melting of urban waste, sewage sludge molten slag generated during melting of sewage sludge, and glassy slag such as casting iron slag generated during casting of ductile cast iron and the like. Among these, casting iron slag having a stable composition leading to a stable foaming state and having a foaming ratio approximately 1.5 to 2 times higher than those of other slags is preferred.

The amount of the slag to be mixed in the mixture can be determined in consideration of moldability of the mixture. The amount is, for example, preferably 80 mass%, more preferably 20 mass% to 70 mass%, and even more preferably 30 mass% to 60 mass%. When the amount is within the above range, the mixture can be smoothly molded without reducing the moldability thereof, and the bulk density of the porous ceramics can be adjusted within a favorable range.

The organic sludge contains organic matter as a main component. An arbitrary material can be used as the organic sludge and activated sludge derived from sewage or a drainage treatment of a factory or the like is particularly preferred. The activated sludge is discharged through aggregation and dehydration processes from waste water treatment equipment using an activated sludge method. Using such organic sludge, micrometer-order pores can be efficiently formed and nanometer-order pores can be further formed. Due to the formation of the nanometer-order pores, porous ceramics having a low bulk density can be obtained and the water retaining properties can be increased. Furthermore, the activated sludge, positioned as waste, derived from the waste water treatment can be reused as a raw material.

The water content of the organic sludge is, for example, preferably 5 mass% to 90 mass%, more preferably 60 mass% to 90 mass%, and even more preferably 65 mass% to 85 mass% with respect to the entire mass of the organic sludge. When the water content is within the above range, a homogenous mixture can be obtained and good moldability is easily maintained.

The content of the organic matter in the organic sludge is not particularly limited, but is, for example, preferably 70 mass% or greater, and more preferably 80 mass% or greater as the content of the organic matter (organic matter content) in the solid content of the organic matter. The maximum content of the organic matter in the organic sludge is 100 mass% only as a guide. As the organic matter content is high, it is possible to easily form micrometer-order pores and it is possible to easily form nanometer-order pores. As the organic matter content, for example, a value obtained using a measurement method according to JIS M8812-1993 with sludge after drying can be used. Specifically, the ash content (mass%) is measured at a carbonization temperature of 700°C and the organic matter content is obtained through the following expression (1).

$$\text{Organic Matter Content (mass\%)} = 100 \text{ (mass\%)} - \text{Ash Content (mass\%)} \ldots(1)$$

The average particle diameter of the organic sludge is preferably 1 $\mu$m to 5 $\mu$m, and more preferably 1 $\mu$m to 3 $\mu$m. The organic sludge is burnt by baking and pores are formed in the burnt part. Accordingly, as the average particle diameter is small, it is possible to easily form micrometer-order pores and it is possible to easily form nanometer-order pores. In this embodiment, the average particle diameter is, for example, a value obtained by measuring a median diameter based on volume. Specifically, a median diameter (50-vol% diameter) based on volume or the like measured by a particle size distribution measuring device (LA-920, manufactured by Horiba, Ltd.) can be used.

The content of the organic sludge in the mixture can be determined in consideration of moldability and the like of the mixture, and is, preferably 1 mass% to 60 mass%, more preferably 5 mass% to 30 mass%, and even more preferably 5 mass% to 20 mass% with respect to the entire mass of the mixture. When the content of the organic sludge in the mixture is within the above range, the mixture has appropriate fluidity and plasticity, and thus the moldability is improved and the mixture can be smoothly molded without blocking the molding device.

The diatomaceous earth is a deposit composed of the remains of diatoms and is porous with micrometer-order pores. Using the diatomaceous earth, fine pores derived from the diatomaceous earth can be formed in porous ceramics.

The diatomaceous earth is not particularly limited, and a material similar to those conventionally used in fire-resistant heat-insulating bricks, filter media and the like can be used. For example, without the need to perform fractional refining of clay minerals (montmorillonite and the like), quartz, feldspar and the like contained in the diatomaceous earth, the amount to be mixed with the mixture can be adjusted in consideration of the content of the above materials. A fire-resistant heat-insulating brick, a filter medium, a stove or the like manufactured using diatomaceous earth and discarded can also be used as diatomaceous earth by pulverization, and this method is preferred from the viewpoint of waste reduction.

The water content of the diatomaceous earth is not particularly limited, and the water content in an air-drying state is, for example, preferably 20 mass% to 60 mass%, more preferably 30 mass% to 50 mass%, and even more preferably 35 mass% to 45 mass% with respect to the entire mass of the diatomaceous earth.

The reason for this is that when the water content of the diatomaceous earth is within the above range, a mixture having good moldability is obtained by using the diatomaceous earth in which coarse particles in impurities are removed during mixing in consideration of the water content.

The water content of the diatomaceous earth can be measured using a conventionally known method such as a drying loss method or Karl-Fischer method for the diatomaceous earth. In this embodiment, using an infrared aquameter having the following specifications for a drying loss method (drying loss form), a sample can be dried (200°C, 12 minutes) and a value obtained through the following expression (2) can be used.

<Specifications>

Measurement Method: Drying loss method (heat drying/mass measurement method)
Minimum Display: Water Content; 0.1 mass%
Measurement Range: Water Content; 0.0 mass% to 100 mass%
Drying Temperature: 0°C to 200°C
Measurement Accuracy: The sample mass is 5 g or greater and the water content is $\pm$0.1 mass%
Heat Source: Infrared Lamp; 185 W

$$\text{Water Content (mass\%)} = [(m_1-m_2)/(m_1-m_0)] \times 100 \ldots(2)$$

$m_1$: Total (g) of mass of container before drying and mass of sample before drying
$m_2$: Total (g) of mass of container after drying and mass of sample after drying
$m_0$: Mass (g) of container after drying

The content of the diatomaceous earth in the mixture can be determined in consideration of the saturation water content, strength and the like obtained in the porous ceramics, and is, for example, preferably 1 mass% to 55 mass%, and more preferably 1 mass% to 45 mass%. When the content of the diatomaceous earth is not greater than the above 55 mass%, the mixture has good moldability, and when the content of the diatomaceous earth is 45 mass% or less, the mixture has better moldability. When the content of the diatomaceous earth is not less than the above-described 1%, porous ceramics having a desired saturation water content and porous ceramics having desired strength are easily obtained.

In this embodiment, the clay is a mineral material which is generally used as a ceramic raw material and exhibits clayey properties and is a material other than the diatomaceous earth.

A known material which has been conventionally used in ceramics can be used as the clay, and the clay is configured with a mineral composition of quartz, feldspar, or other clay-based materials. The clay preferably contains kaolinite as a main constituent mineral, and contains halloysite, montmorillonite, illite, bentonite or pyrophyllite. Among these, coarse particles of quartz having a particle diameter of 500 $\mu$m or greater are preferably contained only as a guide from the viewpoint of suppressing the extension of cracks during sintering and of preventing the destruction of the porous ceramics. The particle diameter of the coarse particles of quartz is preferably 5 mm only as a guide. Examples of such clay include gairome clay. The clay can be formulated singly or in combination of two or more thereof.

The content of the clay in the mixture can be determined in consideration of the strength, moldability and the like obtained in the porous ceramics, and is, for example, preferably 5 mass% to 60 mass%, more preferably 5 mass% to 50 mass%, and even more preferably 10 mass% to 40 mass%. When the content is within the above range, the mixture can be smoothly molded without reducing the moldability thereof, and the porous ceramics can exhibit sufficient strength.

The mixture may contain arbitrary components without inhibiting the effects of this embodiment. Examples of the arbitrary component includes a naphthalene-based plasticizer such as Mighty 2000WH (trade name, manufactured by Kao Corporation); a melamine-based plasticizer such as Melment F-10 (trade name, manufactured by Showa Denko K. K.); a polycarboxylic acid-based plasticizer such as Darex Super 100pH (trade name, manufactured by Grace Chemicals K.K.); an antimicrobial agent such as silver, copper, or zinc; a deodorant such as ammonium chloride or zinc chloride; an adsorption agent such as zeolite or apatite; a strength improving agent such as carbon fiber, basalt fiber, or rock wool having a length of 1 mm to 5 cm; and metallic aluminum.

When arbitrary components are mixed with the mixture, the amount of the arbitrary components to be mixed is preferably determined in a range of, for example, 5 mass% to 10 mass%.

In addition, water may be appropriately mixed in order to adjust the fluidity of the mixture, but when organic sludge is mixed at a favorable mixing ratio, no water may be added in the mixing process.

When the amount of moisture is large, for example, crushed glass or tiles may be included. Particularly, when crushed tiles are mixed, excess moisture can be absorbed, the fluidity of the mixture can be adjusted, and the moldability can be improved. When glass is used, a granular filler of high-melting point glass having a melting temperature of 900°C to 2000°C is preferred. Using particles of high-melting point glass, the moisture can be adjusted while maintaining the pores formed in the porous ceramics. The high-melting point glass can also be used as a strength improving agent.

The material of the high-melting point glass is not particularly limited, but is preferably non-alkali glass, aluminosilicate glass, borosilicate glass, or quartz glass. Among these, borosilicate glass is preferred.

When the material is as described above, the strength of the porous ceramics can be sufficiently improved.

The non - alkali glass is glass substantially containing no alkali metal element such as sodium, potassium, or lithium. The expression "... substantially containing no ..." means that the content of the alkali metal element in the glass composition is 0.1 mass% or less in terms of oxide.

The aluminosilicate glass is oxide glass containing aluminum and silicon as main components.

The borosilicate glass is oxide glass containing boron and silicon as main components.

The quartz glass is glass produced from quartz and has high silicon oxide purity.

The borosilicate glass is oxide glass containing boron and silicon as main components. Examples of the borosilicate glass include AN100 (trade name, non-alkali borosilicate glass, manufactured by Asahi Glass Co., Ltd.).

The high-melting point glass is used in various products such as liquid crystal displays of liquid crystal televisions, panels of plasma displays, cover glass for EL, cover glass for a solid-state image sensing device represented by CCD, glass for an optical filter such as a hand pass filter, glass for a glass substrate for use in Chip-on-Glass, flasks, and beakers.

As particles of the high-melting point glass, waste glass discharged in processes of manufacturing the above-described products, and panels recovered from discarded liquid crystal televisions can be used.

In a case of flat display panels of liquid crystal televisions and the like, a large amount of waste glass is generated in manufacturing of flat displays together with an increase in size of panels and the popularization of smartphones. Waste can be reduced by using waste glass of the flat display panels as particles of high-melting point glass. Therefore, the waste glass of the flat display panels is preferably used as particles of high-melting point glass from the viewpoint of reduction of environmental load. In addition, since the purity of the glass composition is high in the waste glass of the flat display panels, the waste glass can be used as high-melting point glass having stable quality without special refining.

Tiles (for example, Japanese roof tiles) discharged as waste can also be used. Since the tiles have a high melting point, normal tiles discharged as waste can be used without special considerations. In addition, since the tiles have a large moisture absorption amount, the tiles are preferably mixed when the organic sludge has a particularly high moisture content.

The particle diameter of particles of the high-melting point glass or the tiles is preferably 0.1 mm to 5 mm. When the particle diameter is less than 0.1 mm, there is a concern that the formation of pores may be insufficient in the porous ceramics. When the formation of pores is insufficient, there is a concern that the appropriate moisture content, water retaining ratio, or water permeability at each pF value may be reduced.

When the particle diameter is greater than 5 mm, there is a concern that the moldability of the porous ceramics may be reduced or metal fittings of extrusion openings may be broken during molding.

The content of the high-melting point glass or the tiles may be appropriately selected according to target fluidity of the mixture without departing from the object of this embodiment. The content is preferably 5 parts by mass to 40 parts by mass, and more preferably 10 parts by mass to 30 parts by mass with respect to a total 100 parts by mass of the raw materials other than the high-melting point glass and the tiles.

The mixing device used in the mixing process is not particularly limited, and a known mixing device can be used.

Examples of the mixing device include a kneading machine such as Mix Muller (manufactured by Toshin Industry Co., Ltd.); a kneader (manufactured by Moriyama Company Ltd.); and a mixing machine (manufactured by Nitto Kagaku Co., Ltd.).

The molding process is a process of molding the mixture obtained in the mixing process in an arbitrary shape.

As a molding method, a known molding method can be used and the molding method can be determined in consideration of properties of the mixture or a desired shape of the molded product. Examples of the molding method include a method of obtaining a molded product having a plate shape, a particle shape, a columnar shape or the like including pellets by performing extrusion molding using a molding machine; a method of obtaining a molded product by putting a mixture into a mold having an arbitrary shape; and a method in which a mixture is extruded, stretched, or rolled, and then cut into an arbitrary size.

Examples of the molding machine include a vacuum earth kneading and molding machine; a flat plate press molding machine; and a flat plate extrusion and molding machine. Among these, a vacuum earth kneading and molding machine is preferred.

The baking process is a process of obtaining ceramics by: drying the molded product obtained in the molding process (drying operation); baking the dried molded product (baking operation); and sintering the diatomaceous earth, clay or the like.

The drying operation may be performed if necessary, and a known method can be used. For example, the molded product may be naturally dried at normal temperature (for example, about 20°C to 30°C only as a guide), or may be dried in a hot drying hearth at 50°C to 220°C for an arbitrary time. The water content of the dried molded product is not particularly limited, but is, for example, preferably less than 5 mass%, and more preferably less than 1 mass%.

The baking operation is not particularly limited and a known method can be used. Examples thereof include a method of performing baking at an arbitrary temperature using a continuous sintering furnace such as a roller hearth kiln or a batch-wise sintering furnace such as a shuttle kiln. Among these, a continuous sintering furnace is preferably used in the baking operation from the viewpoint of productivity.

The baking temperature (maximum reachable temperature) can be determined according to the properties of the mixture and the like, and is set to, for example, 850°C to 1200°C. When the baking temperature is not lower than the lower limit value, odor components derived from the organic sludge are thermally decomposed and removed. In addition, most organic matter in the organic sludge is volatilized and the weight thereof is thus reduced. When the baking temperature is higher than the upper limit value, vitrification proceeds in the entire ceramics and there is a concern that the pores may be blocked.

If necessary, a crushing process of crushing the porous ceramics into an arbitrary size can also be provided after the baking process. In the crushing process, the porous ceramics obtained in the baking process is crushed and pulverized (crushing operation) using a hammer mill, biaxial rotary crushing, a jet mill, a ball mill, an edge-runner mill or the like, and particles of the porous ceramics can thus be obtained. If necessary, the obtained particles are subjected to sieving (sieving operation) to have an arbitrary particle diameter, preferably a preferred particle diameter as described above. The sieving operation is not necessarily performed when ceramic particles having a particle diameter falling within a desired range are obtained by setting conditions of the crushing operation.

The uses of the soil improving material of this embodiment include particles containing porous ceramic as a constituent material, and a soil improving material in which the particles have a moisture content of 5 vol% or greater at a pF value falling within a range of not more than 2.7 with respect to the entire volume of the particles is used to improve a soil to make the soil suitable for plant growth. In other words, a process of incorporating the soil improving material into a soil can be used as a method of manufacturing a soil suitable for plant growth. In addition, the soil improving material of this embodiment can be used as a culture soil. In other words, the method of manufacturing a soil improving material can be used as a method of manufacturing a culture soil suitable for plant growth.

[Examples]

Hereinafter, this embodiment will be described in detail with reference to examples, but this embodiment is not limited to the following description.

(Raw Materials To Be Used)
Raw materials used in the examples are as follows.

<Organic Sludge>

Activated sludge discharged from waste water treatment equipment of a dyehouse (Komatsu Seiren Co., Ltd.) by an activated sludge method through aggregation and dehydration processes was used as organic sludge. The organic matter content (with respect to the solid content) and the water content of the activated sludge were 83 mass% and 85 mass%, respectively.

<Clay>

Gairome clay (Gifu-ken) was used as clay.

<Slag>

Casting iron slag was used as a foaming agent. This casting iron slag is ductile casting iron slag having $SiO_2$, $Al_2O_3$, CaO, $Fe_2O_3$, FeO, MgO, MnO, $K_2O$, and $Na_2O$ as main components.

<Diatomaceous Earth>

As diatomaceous earth, powdered diatomaceous earth having a water content of 5 wt% with respect to the entire mass of the diatomaceous earth as a raw material of a firebrick produced in Noto Distriction was used.

<Tiles>

Tiles discarded after used as residential tiles were pulverized to have a particle diameter of 0.1 mm to 1.2 mm and used.

<Zeolite>

Manufactured by Sinkou SunRise Ltd.; Trade Name: Pure Lite

<Perlite>

Manufactured by Kitamatsu Ltd.

<Vermiculite>

Made in China; Distributed by PLANT Co., Ltd.
The physical properties of this embodiment were measured using the following methods, respectively.

<Apparent Density>

A three-phase distribution was measured according to the three-phase distribution/bulk density (volumenometric method) described in "Soil Standard Analysis/Measurement Method (Hakuyusha Co.,Ltd.), and the bulk density (apparent specific gravity, g/ml) obtained from the dry soil weight (g) measured during the measurement was set as an apparent density.

<Moisture Content (%) At Each pF Value (volume moisture ratio)>

A moisture content at each pF value was measured according to a horizontal rotor for a 100 ml-circular cylinder in the water retaining property C centrifugal method described in "Soil Standard Analysis/Measurement Method" (Hakuyusha Co.,Ltd.). In "Soil Standard Analysis/Measurement Method" (Hakuyusha Co.,Ltd.), a sample subjected to the measurement at a pF value of up to 3.2 using a pressure plate method is used. Herein, particles put into a water-saturated state after immersion for 1 hour in water were used as a sample. The calculation expression is as described above.

<Water Retaining Ratio>

The measurement was performed according to the moisture (dry-heat method) described in "Soil Standard Analysis/Measurement Method" (Hakuyusha Co.,Ltd.) to set a volume moisture ratio (%) as a water retaining ratio (%). Particles put into a water-saturated state after immersion for 1 hour in water were used as a sample.

<Saturated Hydraulic Conductivity>

The measurement was performed according to the saturated hydraulic conductivity-falling head test method described in "Soil Standard Analysis/Measurement Method" (Hakuyusha Co.,Ltd.).

<Three-Phase Distribution>

The measurement was performed according to the three-phase distribution/bulk density (volumenometric method) described in "Soil Standard Analysis/Measurement Method (Hakuyusha Co.,Ltd.). A sample to be used was subjected to a treatment at a pF value of 1.5.

<pH>

The measurement was performed according to the pH measurement method (measurement method of measuring a pH ($H_2O$) using a glass electrode method) described in "Soil Standard Analysis/Measurement Method (Hakuyusha Co.,Ltd.).

<Confirmation of Presence of Communication Between Pores>

To confirm the presence of communication between pores in porous ceramics, large particles of porous ceramics obtained were immersed in water to absorb the water sufficiently. Then, a particle was cut and its cross-section was observed for confirmation. When the moisture was evenly distributed and retained in the porous ceramics, it was judged that the pores communicate with each other (expressed by the symbol "O"). When the moisture did not spread in the porous ceramics, it was judged that the pores or voids are separated from each other, and the pores do not communicate with each other or do not sufficiently communicate with each other (expressed by the symbol "X"). The confirmation was performed with the state of the base on the substrate-like porous ceramics.

(Example 1)

Slag, organic sludge, clay, and diatomaceous earth were mixed using a Mix Muller (manufactured by Sintokogio, Ltd.) according to the composition shown in Table 1, thereby obtaining a mixture in a plastic state (mixing process).
Then, the obtained mixture was extruded and rolling molded using a vacuum earth kneading and molding machine (manufactured by Takahama Industry Co., Ltd.), and thus a strip-like primary molded product having a width of 60 cm and a thickness of 2 cm was obtained. This primary molded product was cut into an arbitrary pitch and width, thereby obtaining a substantially square plate-like molded product having a thickness of 2 cm (molding step).
The obtained molded product was dried using a hot air drying machine (180°C, 0.5 hours) and the moisture content thereof was set to 1 mass% or less. Thereafter, using a continuous sintering furnace, the molded product was baked at a baking temperature of 1050°C for a retention time of 7 minutes. As the continuous sintering furnace, a roller hearth kiln (effective length of sintering furnace: total length of 15 m, dividing the sintering furnace into Zones 1 to 10 having a size of 1.5 m) was used. In the obtained plate-like porous ceramics, millimeter-order pores, micrometer-order pores, and nanometer-order pores coexisted and communicated with each other. Various physical properties were recorded in Table 1.
After the baking, the obtained plate-like porous ceramics was pulverized using a hammer mill. Next, using sieves, the pulverized material was divided into particles having a diameter of greater than 0.02 mm to 1 mm (hereinafter, called small particles), particles having a diameter of greater than 1 mm to 5 mm (hereinafter, called medium particles), and particles having a diameter of greater than 5 mm to 50 mm (hereinafter, called large particles), and a soil improving material formed of porous ceramic particles was obtained. Apparent densities and the like of the small particles, the medium particles, and the large particles were measured and recorded in Table 1, respectively.

In a pottery container, a soil improving material formed only of the porous ceramic particles was used alone as a culture soil (the medium particles and the small particles were mixed at a mass ratio of 1:1), and Pachira, Rhoeo discolor, Chlorophytum comosum, Dracaena deremensis 'Compacta', and Hoya were planted and grown indoors. After two months, the plants were grown well and no dust was raised by the culture soil, so the result was good.

Watering was performed approximately once a month and maintenance was simply performed. Accordingly, the soil improving material of this embodiment can also be used as a culture soil as is.

A soil improving material formed of the porous ceramic particles (medium particles) as a joint soil for grass was laid on the grass in July. At the end of September after about three months, the grass was verdant as in a space where washed sand, which is generally distributed as a joint soil, was laid, and the soil improving material was effective as a joint soil. Accordingly, the soil improving material of this embodiment can be used as a culture soil as is.

In order to confirm the soil improving properties of the soil improving material of this embodiment, clayey soil (soil used in the manufacturing of the porous ceramics) was mixed with the soil improving material of this embodiment so that the amount of the medium particles to be mixed was 10 mass% and 30 mass%. As a result, when the clayey soil was used alone, the saturated hydraulic conductivity was $1.3 \times 10^{-3}$ cm/s. However, in the soil in which 10 mass% of the soil improving material of this embodiment was mixed, the saturated hydraulic conductivity was $1.1 \times 10^{-2}$ cm/s, and in the soil in which 30 mass% of the soil improving material of this embodiment was mixed, the saturated hydraulic conductivity was $4.8 \times 10^{-2}$ cm/s, whereby well-drained culture soils with a great improvement by more than ten times was obtained. Accordingly, the soil improving material of this embodiment also has excellent performance as a soil improving material.

In order to confirm the soil improving properties of the soil improving material of this embodiment, Akadama soil (manufactured by Hirota Ltd.) was mixed with the soil improving material of this embodiment so that the amount of the medium particles to be mixed was 30 mass%. As a result, when the Akadama soil was used alone, the water retaining ratio was 36.1%, but in the soil in which the soil improving material of this embodiment was mixed, the water retaining ratio was 43.9% and was improved by 7% or greater. Accordingly, the soil improving material of this embodiment is effective as a soil improving material improving the water retaining property.

Using the large particles of the soil improving material of this embodiment as a soil for hydroponics, Pachira was cultivated. The Pachira was grown well and the roots of the plant got into the gaps between the large particles and into the pores of the large particles. Accordingly, it was confirmed that the soil improving material of this embodiment can also be preferably used as a soil for hydroponics.

(Example 2)

A soil improving material formed of porous ceramic particles was obtained in the same manner as in Example 1, except that the composition of a mixture for obtaining porous ceramics was as recorded in Table 1, in the molding process, the mixture extruded into a cylindrical shape having a diameter of 1.5 cm using a vacuum earth kneading and molding machine was cut into a length of 3 cm to obtain a cylindrical molded product, and in the baking process, the drying operation for reducing the water content of the molded product was omitted. Apparent densities and the like of the small particles, the medium particles, and the large particles were measured and recorded in Table 1, respectively. In Table 1, in the column of "Saturated Hydraulic Conductivity", "quick" indicates that the water permeation rate was high, and thus it was not possible to measure the time required for the water surface in the extensible tube to fall from an upper line to a lower line.

(Example 3)

A soil improving material formed of porous ceramic particles was obtained in the same manner as in Example 1, except that the composition of a mixture for obtaining porous ceramics was as recorded in Table 1, in the molding process, the mixture extruded into a cylindrical shape having a diameter of 1.5 cm using a vacuum earth kneading and molding machine was cut into a length of 3 cm to obtain a cylindrical molded product, and in the baking process, the drying operation for reducing the water content of the molded product was omitted. Apparent densities and the like of the small particles, the medium particles, and the large particles were measured and recorded in Table 1.

As reference examples, three-phase distributions of zeolite, perlite, and vermiculite were measured. The results were as follows: solid phase:liquid phase:gas phase = 29.7:24.3:46.0 in the zeolite; solid phase:liquid phase:gas phase = 6.0:29.2:64.8 in the perlite; and solid phase:liquid phase:gas phase = 10.8:45.8:43.4 in the vermiculite.

[Table 1]

| | Example 1 | | | | Example 2 | | | Example 3 | | |
|---|---|---|---|---|---|---|---|---|---|---|
| Clay | 30 | | | | 25 | | | 20 | | |
| Slag | 55 | | | | 40 | | | 40 | | |
| Sludge | 10 | | | | 15 | | | 20 | | |
| Diatomaceous Earth | 2 | | | | - | | | - | | |
| Tiles | - | | | | 20 | | | 20 | | |
| Particle Diameter | Plate-like Product | Large particles | Medium Particles | Small Particles | Large particles | Medium Particles | Small Particles | Large particles | Medium Particles | Small Particles |
| | | 5mm~2cm | 1mm~5mm | 0.02mm~1mm | 5mem~2cm | 1mm~5mm | 0.02mm~1mm | 5mm~2cm | 1mm~5mm | 0.02mm~1mm |
| Apparent Density (g/ml) | 0.75 | 0.53 | 0.61 | 0.95 | 0.52 | 0.73 | 0.95 | 0.48 | 0.63 | 0.99 |
| Moisture Content at Each pF Value (%) (volume moisture ratio) — Greater than 2.7 | 5.9 | 4.5 | 2.5 | 24.2 | 5.9 | 4.6 | 17.8 | 7.8 | 10 | 20.1 |
| Moisture Content at Each pF Value (%) (volume moisture ratio) — Greater than 1.5 to 2.7 | 3.4 | 3 | 5.1 | 13.8 | 6.3 | 3.1 | 13.4 | 3.4 | 3.4 | 14.3 |
| Moisture Content at Each pF Value (%) (volume moisture ratio) — 1.5 or less | 12.1 | 10 | 14.6 | 24.3 | 7.7 | 12.4 | 25.6 | 6.4 | 6.4 | 20.5 |
| Moisture Content at pF Value of Not More Than 2.7 (%) | 15.5 | 13 | 19.7 | 38.1 | 14 | 15.5 | 39 | 9.8 | 9.8 | 34.8 |
| Water Retaining Ratio (volume moisture ratio) | 74.1 | 17.8 | 22.2 | 62.3 | 17.2 | 20.1 | 56.8 | 17.6 | 27.3 | 54.9 |
| Saturated Hydraulic Conductivity (cm/s) | quick | quick | quick | 1.1 | quick | quick | 0.9 | quick | quick | 0.94 |
| pH | 8 | 8 | 8.2 | 8.4 | 8.2 | 8.3 | 9 | 8.4 | 8.3 | 9.5 |

(continued)

| | | Example 1 | | | | Example 2 | | | Example 3 | | |
|---|---|---|---|---|---|---|---|---|---|---|---|
| Three-Phase Distribution (pF value of 1.5) | Solid Phase | - | 14.3 | 26.4 | 42.9 | - | 23.7 | 40.7 | - | 28.7 | 34 |
| | Liquid Phase | - | 12.1 | 23.6 | 33.8 | - | 17.8 | 47.2 | - | 15 | 48 |
| | Gas Phase | - | 73.6 | 50 | 23.3 | - | 58.5 | 12.1 | - | 56.3 | 18 |
| Presence of Communication Between Pores | | O | O | | | O | | | O | | |

Industrial Applicability

A soil improving material of the invention is capable of improving a soil to make the soil suitable for plant growth, and thus the soil containing the soil improving material of the invention is an excellent culture soil for plant growth.

The soil improving material of the invention may be used as a culture soil as is.

**Claims**

1. A soil improving material comprising:

   particles containing porous ceramics as a constituent material,
   wherein the particles have a moisture content of 5 vol% or greater at a pF value falling within a range of not more than 2.7 with respect to the entire volume of the particles.

2. The soil improving material according to claim 1,
   wherein the particles have a water retaining ratio of 15% or greater.

3. The soil improving material according to claim 1 or 2,
   wherein the particles have a saturated hydraulic conductivity of 0.1 cm/s or greater.

4. A culture soil comprising:

   the soil improving material according to any one of claims 1 to 3.

<div align="center">

**INTERNATIONAL SEARCH REPORT**

</div>

| | International application No. |
|---|---|
| | PCT/JP2013/080016 |

**A. CLASSIFICATION OF SUBJECT MATTER**
*C09K17/02*(2006.01)i, *A01G1/00*(2006.01)i, *C09K101/00*(2006.01)n

According to International Patent Classification (IPC) or to both national classification and IPC

**B. FIELDS SEARCHED**

Minimum documentation searched (classification system followed by classification symbols)
C09K17/02, A01G1/00, C09K101/00

Documentation searched other than minimum documentation to the extent that such documents are included in the fields searched
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)
JSTPlus/JST7580(JDreamIII)

**C. DOCUMENTS CONSIDERED TO BE RELEVANT**

| Category* | Citation of document, with indication, where appropriate, of the relevant passages | Relevant to claim No. |
|---|---|---|
| X | JP 2005-229960 A (Kabushiki Kaisha Inoue Jimusho), 02 September 2005 (02.09.2005), claims; paragraphs [0009], [0010]; example 1 (Family: none) | 1-4 |
| X | JP 2007-290935 A (Nagoya Institute of Technology), 08 November 2007 (08.11.2007), claims; examples 1 to 4 (Family: none) | 1-4 |
| X | JP 3-502637 A (Effem GmbH), 20 June 1991 (20.06.1991), claims; examples & US 5328498 A      & EP 279056 A1 & WO 1990/001259 A1 | 1-4 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 January, 2014 (24.01.14) | 04 February, 2014 (04.02.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/080016

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2000-336356 A  (Okutama Kogyo Co., Ltd.),<br>05 December 2000 (05.12.2000),<br>claims; paragraph [0020]; examples; table 3<br>(Family: none) | 1-4 |
| A | JP 2011-212561 A  (Kikukawa Construction Materials Co., Ltd.),<br>27 October 2011 (27.10.2011),<br>claims; paragraph [0055]<br>(Family: none) | 1-4 |

Form PCT/ISA/210 (continuation of second sheet) (July 2009)

**EP 2 918 656 A1**

**Patent documents cited in the description**

- JP 2012246064 A
- JP 2011250762 A